# EUROPÄISCHE PATENTSCHRIFT

(11) **EP 0 527 292 B1**
(45) Veröffentlichungstag und Bekanntmachung des Hinweises auf die Patenterteilung: **04.01.1995**
(21) Anmeldenummer: 92105420.1
(22) Anmeldetag: 30.03.1992
(51) Int. Cl.: B65D 19/44, B65D 19/20

(54) **Warenbehälter aus Faltmaterial zum Aufsetzen auf eine Mehrweg-Palette**
Goods container made from foldable material for placing upon a returnable palette
Récipient pour marchandises en matériau pliable à placer sur une palette réutilisable

(30) Priorität: 09.08.1991 DE 9109872 U; 22.02.1992 EP 92103019
(43) Veröffentlichungstag der Anmeldung: 17.02.1993
(73) Patentinhaber: Gustav Stabernack GmbH, D-36339 Lauterbach (DE)
(72) Erfinder: Schmitt, Paul, D-36339 Lauterbach (DE)
(74) Vertreter: Gudel, Diether

(56) Entgegenhaltungen:
- DE-U- 8 332 915
- FR-A- 2 304 532

## Beschreibung

Die Erfindung betrifft einen Warenbehälter aus Faltmaterial mit einem hohlen, rechteckigen Fuß mit Fortsätzen an seiner Unterseite, die in entsprechende Aufnahmen eingreifen, die an der Oberseite einer Merhweg-Palette ausgebildet sind, und in die die Fortsätze von oben eingreifen.

Mehrweg-Paletten bestehen aus hartem Material, üblicherweise aus Kunststoffmaterial, damit sie mehrfach verwendet werden können. Üblicherweise wird auf eine Mehrweg-Palette ein Warenbehälter aufgesetzt, aus dem die Waren in einem Ladengeschäft abverkauft werden können.

Bei Mehrweg-Paletten besteht das Problem, den zugehörigen Warenbehälter lagesicher auf der Palette zu halten. Der Warenbehälter soll von der Palette leicht getrennt werden können, damit die Palette anschließend wieder verwendet werden kann.

Hierzu ist es bekannt, Fortsätze an der Unterseite des Warenbehälters in entsprechende Schlitze in der Kunststoffpalette einzustecken. Für diese Fixierung sind aber Paletten mit Schlitzen Voraussetzung, was nicht immer gegeben ist. Außerdem ist der Einsatz des ja mit Waren befüllten Warenbehälters in die Schlitze schwierig, weil die relativ engen Schlitze genau getroffen werden müssen. Schließlich ist diese Verbindung auch nicht belastbar genug.

Grundsätzlich wäre es zwar möglich, den Warenbehälter an die Palette anzukleben, anzuklammern oder anzutackern, jedoch wird eine derart benutzte Palette dann nicht mehr von Hersteller zurückgenommen, was also für den Kunden wesentliche preisliche Nachteile mit sich bringt.

Der Erfindung liegt somit die Aufgabe zugrunde, die Nachteile der bekannten Systeme zu vermeiden und einen Warenbehälter mit den eingangs genannten Merkmalen vorzuschlagen, bei dem das Aufsetzen des - ggfs. befüllten - Warenbehälters auf die Mehrweg-Palette aus Kunststoffmaterial fühlbar leichter ist, wobei gleichzeitig die Arretierung des Warenbehälters an der Palette allen in der Praxis an sie gestellten Anforderungen genügen soll, insbesondere in Bezug auf Belastbarkeit, und wobei trotzdem auf eine feste Verbindung zwischen der Palette und dem Warenbehälter verzichtet werden soll, welche feste Verbindung beispielsweise durch Ankleben oder Anklammern möglich wäre.

Zur Lösung dieser Aufgabe ist der Warenbehälter mit den Merkmalen des Oberbegriffs von Patentanspruch 1 erfindungsgemäß dadurch gekennzeichnet, daß die Fortsätze an nach innen gefalteten Laschen an der Unterseite des Fußes ausgebildet sind, und zwar als mehrkantige, offene oder geschlossene Rohrstücke.

Die nach innen gefalteten Laschen an der Unterseite des Mantels des Warenbehälters dienen als Auflagen für den Warenbehälter auf der Kunststoffpalette. Gleichzeit werden durch sie die nach unten gefalteten Fortsätze richtig positioniert derart, daß die Fortsätze in die nach oben offenen Aufnahmen der Kunststoffpalette eingesetzt werden können. Diese Aufnahmen sind üblicherweise die Füße der Palette. Die lichte Weite der Aufnahmen ist üblicherweise größer als der Querschnitt der nach unten weisenden
Fortsätze, so daß die Fortsätze und mit ihnen der gesamte Warenbehälter sehr einfach und leicht an der Palette fixiert werden kann, wobei dann die Fortsätze in die Aufnahmen eingesetzt werden. Gleichzeitig sind die Arretierungen höher belastbar als beim Stand der Technik, weil sie als Rohrstücke ausgebildet sind, d.h. es steht fühlbar mehr Material zur Verfügung als bei den bekannten Systemen.

Eine wichtige Ausgestaltung der Erfindung ist dadurch gekennzeichnet, daß wenigstens eines der Rohrstücke eine entsprechende Ausnehmung in einer der angrenzenden, nach innen gefalteten Laschen durchgreift. Die nach innen gefalteten Laschen werden dadurch in ihrer waagerechten Lage positioniert und arretiert, so daß ein an und für sich auch mögliches Verkleben der Laschen miteinander entbehrlich wird.

Die Rohrstücke können ein U-Profil ausbilden. Sie werden noch höher belastbar, wenn das U-Profil durch eine Klebelasche zu einem Vierkantprofil ergänzt ist, wobei die Klebelasche mit der betreffenden, nach innen gefalteten Lasche verklebt ist.

Allgemein sei erwähnt, daß die Anzahl der Fortsätze des Warenbehälters nicht mit der Anzahl der Aufnahmen der Palette übereinstimmen muß. Insoweit genügt es, wenn der Warenbehälter an der Palette lagesicher gehalten ist. Auch wird man die Abmessungen so treffen, daß die Fortsätze mit ausreichend Spiel in die Aufnahmen eingesetzt werden, wodurch die Handhabung erleichtert wird.

Die Erfindung wird im folgenden anhand eines Ausführungsbeispiels näher erläutert, aus dem sich weitere wichtige Merkmale ergeben. Es zeigt:
- Fig. 1 -: eine Ansicht eines erfindungsgemäßen Warenbehälters von der Bodenseite aus gesehen;
- Fig. 2 -: in gegenüber Fig. 1 vergrößertem Maßstab einen Schnitt längs der Linie II-II von Fig. 1;
- Fig. 3 -: ebenfalls in vergrößertem Maßstab einen Schnitt längs der Linie III-III von Fig. 1.

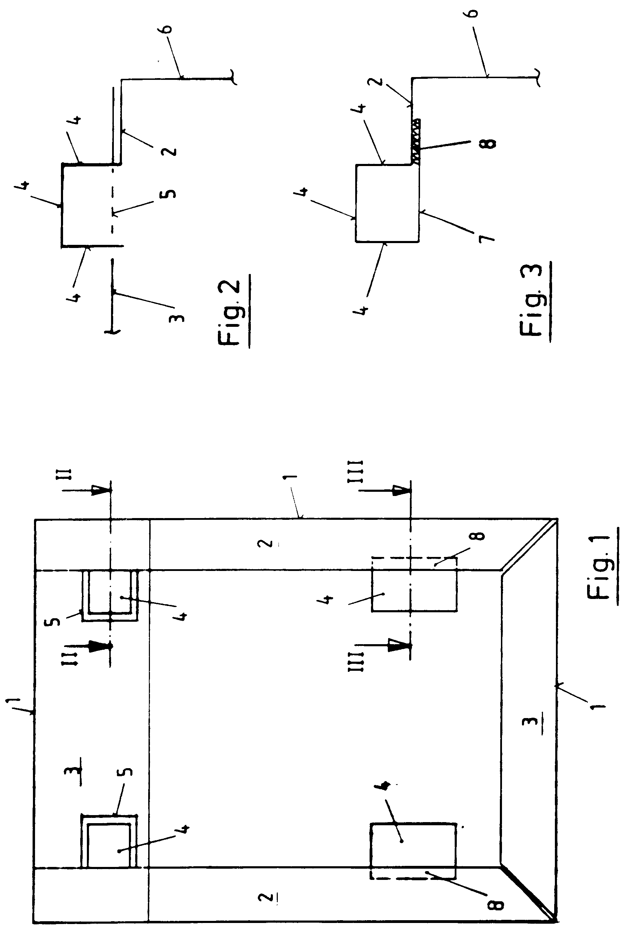

Fig. 1 zeigt einen rechteckigen Warenbehälter mit Wänden, die sich zu einem hohlen "Fuß" verlängern, an deren untere Kanten 1 sich in Längsrichtung erstreckende Laschen 2 sowie Laschen 3 angelenkt sind, die sich in Querrichtung erstrecken. Die Laschen dienen als Auflagefläche für eine Kunststoffpalette.

Oben in Fig. 1 überlappen sich die Laschen 2, 3, 2, während dies unten nicht der Fall ist.

An die freien Kanten der Laschen 2 sind oben in Fig. 1 U-förmige Fortsätze mit Fortsatzfeldern 4 angelenkt. Vgl. Fig. 2. Diese beiden Fortsätze durchgreifen eine etwas größere, rechteckige Öffnung 5 in der Querlasche 3. Dadurch werden die Laschen 2, 3, 2 zueinander arretiert und der im übrigen flach faltbare Warenbehälter in seiner aufgefalteten, zeichnerisch dargestellten Lage gehalten. Eine der Wände des Warenbehälters ist in Fig. 2 im übrigen bei Pos. 6 angedeutet.

Fig. 3 zeigt Einzelheiten eines größeren Fortsatzes, bei dem der U-förmige Fortsatz 4 nach Fig. 2 durch eine Klebelasche 7 zu einem geschlossenen Rohrstück ergänzt ist. Die Klebelasche ist mit der Lasche 2 bei Pos. 8 verklebt.

Die Position und Größe der Fortsätze 4 sind so getroffen, daß der Warenbehälter mit seinen Fortsätzen von oben in entsprechende Aufnahmen (Nester) der Kunststoffpalette eingesetzt werden kann.

Wenn vorstehend und in den Patentansprüchen von mehrkantigen Rohrstücken gesprochen wurde, die die Fortsätze 4 ausbilden, so ist die Anzahl der Kanten bzw. Flächen grundsätzlich beliebig; es kann sich sogar um runde offene oder geschlossene Rohrstücke handeln.

## Patentansprüche

1. Warenbehälter aus Faltmaterial mit einem hohlen, rechteckigen Fuß mit Fortsätzen (4) an seiner Unterseite, die in entsprechende Aufnahmen eingreifen, die an der Oberseite einer Mehrweg-Palette ausgebildet sind, und in die die Fortsätze (4) von oben eingreifen,
**dadurch gekennzeichnet**,
daß die Fortsätze (4) an nach innen gefalteten Laschen (2,3) an der Unterseite des Fußes ausgebildet sind, und zwar als mehrkantige, offene oder geschlossene Rohrstücke.

2. Warenbehälter nach Anspruch 1,
**dadurch gekennzeichnet**,
daß die Rohrstücke ein U-Profil ausbilden.

3. Warenbehälter nach Anspruch 2,
**dadurch gekennzeichnet**,
daß das U-Profil durch eine Klebelasche (7) zu einem Vierkantprofil ergänzt ist, wobei die Klebelasche (7) mit der betreffenden Lasche (2) verklebt ist.

4. Warenbehälter nach einem der Ansprüche 1 bis 3,
**dadurch gekennzeichnet**,
daß wenigstens eines der Rohrstücke eine entsprechende Ausnehmung (5) in einer der angrenzenden, nach innen gefalteten Laschen (2,3) durchgreift.

## Claims

1. A goods container made from folding material with a hollow rectangular foot with extensions (4) on its underside which engage into corresponding fixtures which are formed on the outer side of a multiple-entry palette and into which the extensions engage,
characterised in that the extensions (4) are formed on tabs folded inwards (2, 3) on the underside of the foot, namely in the form of multi-edged, open or closed tube sections.

2. A goods container according to Claim 1,
characterised in that the pipe sections form a U shape.

3. A goods container according to Claim 2,
characterised in that the U shape is supplemented by an adhesive tab (7) to form a square shape, wherein the adhesive tab (7) is attached to the bracket in question by adhesion.

4. A goods container according to one of Claims 1 to 3,
characterised in that at least one of the tube sections passes through a corresponding recess (5) in one of the adjacent tabs (2, 3) folded inwards.

## Revendications

1. Récipient pour marchandises, en matériau pliable, à pied rectangulaire creux comportant à son côté inférieur des prolongements (4), qui s'engagent dans des logements correspondants, réalisés au côté supérieur d'une palette réutilisable et dans lesquels les prolongements (4) s'engagent par le haut, caractérisé en ce que les prolongements(4) sont réalisés à des pattes (2, 3), pliées vers l'intérieur, réalisées au côté inférieur du pied et notamment sous forme de pièces tubulaires polygonales, ouvertes ou fermées.

2. Récipient pour marchandises selon la revendication 1, caractérisé en ce que les pièces tubulaires constituent un profil en U.

3. Récipient pour marchandises selon la revendication 2, caractérisé en ce que le profil en U est complété au moyen d'une patte adhésive (7) en un profil carré, la patte adhésive (7) étant collée à la patte (2) concernée.

4. Récipient pour marchandises selon l'une des revendications 1 à 3, caractérisé en ce qu'au moins l'une des pièces tubulaires traverse un évidement (5) correspondant, ménagé dans l'une des pattes (2, 3) limitrophes, pliée vers l'intérieur.
